# EUROPEAN PATENT APPLICATION

(11) **EP 4 257 385 A1**
(43) Date of publication of application: **11.10.2023**
(21) Application number: 22203679.0
(22) Date of filing: 25.10.2022
(51) Int. Cl.: B60J 1/00, B60J 1/20

(54) **VEHICLE WINDOW COVERING DEVICE**

(30) Priority: 07.04.2022 AU 2022900915; 03.08.2022 US 202217880152
(71) Applicant: Camps Worldwide Pty Limited, Chisholm, NSW 2322 (AU)
(72) Inventor: TRUDGETT, Christopher Allan, Newcastle West, New South Wales, 2302 (AU)
(74) Representative: Cabinet Beau de Loménie

(57) **Abstract**

A vehicle window covering device (5) includes an outer frame (10) configured to be installed against an internal wall of a vehicle at a location surrounding a window, the outer frame (10) including a front face (12), and a generally perpendicular outer return (14), the outer return (14) being configured to be seated against the internal wall or window frame of the vehicle. An internal frame (30) is hingedly secured to the outer frame (10), the internal frame (30) being selectively pivotal between an open position and a closed position in which the internal frame (30) is at least partially located within the outer frame (10).

## Description

### Technical Field

The present application claims priority from Australian Provisional Patent Application No. 2022900915 (filed 7 April 2022) and US Patent Application No. 17/880,152, the contents of which are incorporated in their entirety herein.

The present disclosure relates to a vehicle window covering device. In particular, the present invention relates to a window or door covering device for caravans, motor homes and boats. However, it will be appreciated that the invention may be applied to other vehicles, buildings, and structures.

### Background of the Invention

In recent years, there has been a trend toward timber and aluminium louvers for window and door coverings. In addition to their stylish aesthetic, louvers are able to provide functional advantages over traditional window dressings including improved thermal properties and increased privacy and light blocking characteristics.

Louvers are normally mounted to a frame which is pivotal with hinges about a vertical axis. This installation enables three different modes of use:
1) closed and covering the window;
2) partially open such that the frame is closed and the louvers are open and partly cover the window; and
3) fully open such that the frame and louvers are away from the window.

In order for the louvers to be movable between positions 1 and 2, the louver blades need to be installed a sufficient distance away from the pane of glass. If the distance is not sufficient, the louvers cannot be rotated about a horizontal axis between the closed and partially open positions.

However, despite their desirability in contemporary applications, existing mounting systems for timber and aluminium louvers are not an optimal window or door covering for vehicles such as caravans motor homes and boats for several reasons. In particular, the depth of the louver frame and louver blades is significant, and the wall thickness of a typical caravan or motor home is minimal in order to optimise the internal usable space within the caravan or motor home. As such, the wall thickness is generally not sufficiently thick to enable a window reveal to be included that can accommodate the frame to which the louvers are mounted.

Accordingly, existing louver installation systems are not suited for application in vehicles.

### Object of the Invention

It is an object of the present invention to substantially overcome or at least ameliorate one or more of the above disadvantages, or to provide a useful alternative.

### Summary of the Invention

In a first aspect, the present invention provides a vehicle window covering device comprising:
an outer frame configured to be installed against an internal wall of a vehicle at a location surrounding a window, the outer frame including a front face; and
a generally perpendicular outer return, the outer return being configured to be seated against the internal wall or window frame of the vehicle,
an internal frame hingedly secured to the outer frame, the internal frame being selectively pivotal between an open position and a closed position in which the internal frame is at least partially located within the outer frame.

The outer frame front face preferably includes a generally rectangular channel having one or more fastener receiving holes or slots, further wherein the device includes a cover plate configured to at least partially fill the rectangular channel to conceal fasteners.

The outer frame front face preferably further includes an inner return, wherein the outer and inner returns extend away from opposing edges of the outer frame front face, wherein the inner return is configured to seat the internal frame.

The outer frame inner return preferably defines a rebate configured to receive at least a portion of the internal frame.

A wall of the outer frame inner return preferably defines the rebate includes a channel configured to receive a seal.

The internal frame preferably includes a front face and a rear body, and a plurality of louver blades have mounting portions which are sandwiched between the front face and rear body.

Preferably the internal frame rear body includes a fly screen mounting unit.

The internal frame rear body is preferably fabricated in a rectangular shape from a generally "L" shaped profile, having a first arm secured to the front face, and a second arm extending away from the rear side of the internal frame, the second arm providing the fly screen mounting unit.

The outer frame front face preferably includes a plurality of predefined holes located on a generally rectangular path, wherein the holes are configured to receive fasteners.

The vehicle window covering device of any one of the preceding claims, further comprising a pneumatic strut extending between the internal frame and the outer frame.

The vehicle window covering device of claim 10, wherein two pneumatic struts are included, and positioned one on either side of the internal frame.

### Brief Description of the Drawings

A preferred embodiment of the invention will now be described by way of specific example with reference to the accompanying drawings, in which:
Fig. 1 is an exploded view of a vehicle window covering device of the invention;
Fig. 2 depicts a front perspective view of the vehicle window covering device according to a first embodiment;
Fig. 3 depicts a front perspective view of the vehicle window covering device according to a second embodiment;
Fig. 4 is a rear view of the device of Fig. 1;
Fig. 5 is a front perspective view of the vehicle window covering device of Fig. 1 in a partially open configuration;
Fig. 6 is a perspective front view of a second embodiment of the vehicle window covering device;
Fig. 7 is an exploded view of the vehicle window covering device of Fig. 6;
Fig. 8 is a partial rear perspective view showing a pneumatic strut mounting bracket of the vehicle window covering device of Fig. 6; and
Fig. 9 is a further front perspective view of the vehicle window covering device of Fig. 6.

### Detailed Description of the Preferred Embodiments

A vehicle window covering device 5 includes an outer frame 10. The outer frame 10 is generally square or rectangular in external dimensions and configured to be attached to an internal wall 20 of a vehicle such as a caravan, mobile home or boat to provide an internal window reveal around the perimeter of the window.

The outer frame 10 is preferably manufactured from a polymer as a single piece construction. It has rounded corners and edges which improve the visual appearance of the window covering device 5.

The outer frame 10 is fabricated in standard sizes that correspond with commonly used window dimensions in vehicles such as caravans. Typically the outer frame 10 is produced in sizes ranging from 500mm x 500mm up to 1,200mm x 550mm. The outer frame 10 can be produced to be installed in combination with any sized window.

However, it will be appreciated that the outer frame 10 does not need to precisely fit the existing window, and it can be provided in dimensions which are significantly larger than the existing glazed window, whilst still providing the requisite level of privacy and thermal properties.

The outer frame 10 is fabricated from a moulded or otherwise hollow formed section of plastic, but could be cast from stainless steel, aluminium or another suitable material.

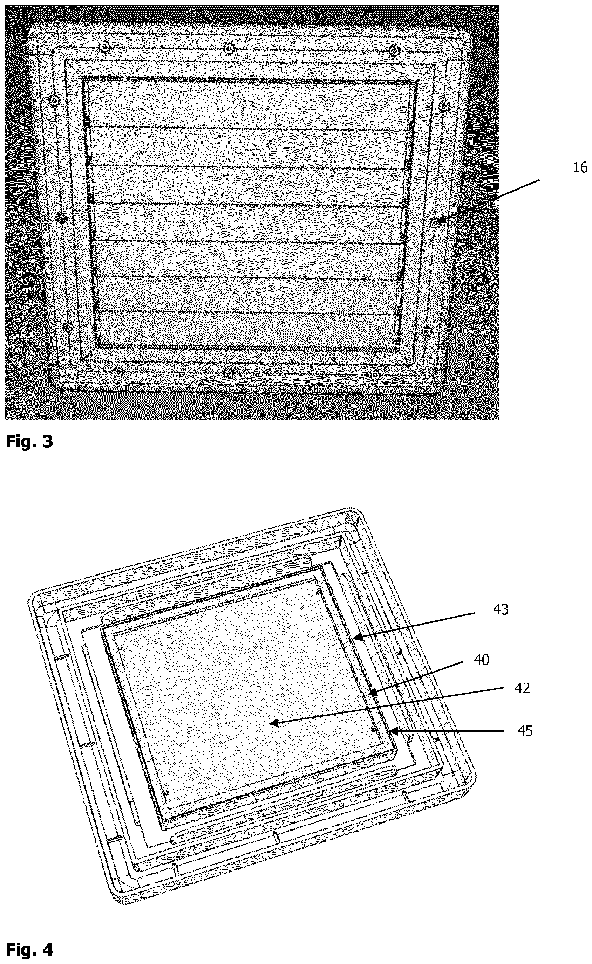

The outer frame 10 is fabricated having a generally "U" shaped cross-section, having a front face 12 and a pair of return arms 14, including an outer return (furthest from the centre of the outer frame 10) and inner returns (closest to the centre of the outer frame 10). The return arms 14 extend generally perpendicular to the front face 12. As will be described herein, the front face 12 provides a mounting surface to secure the outer frame 10 to the window of the vehicle. The perpendicularly extending return arms 14 provide an integral window reveal. Referring to Fig. 4, the outer return arms may be buttressed to each with webs of plastic to provide improved stiffness properties.

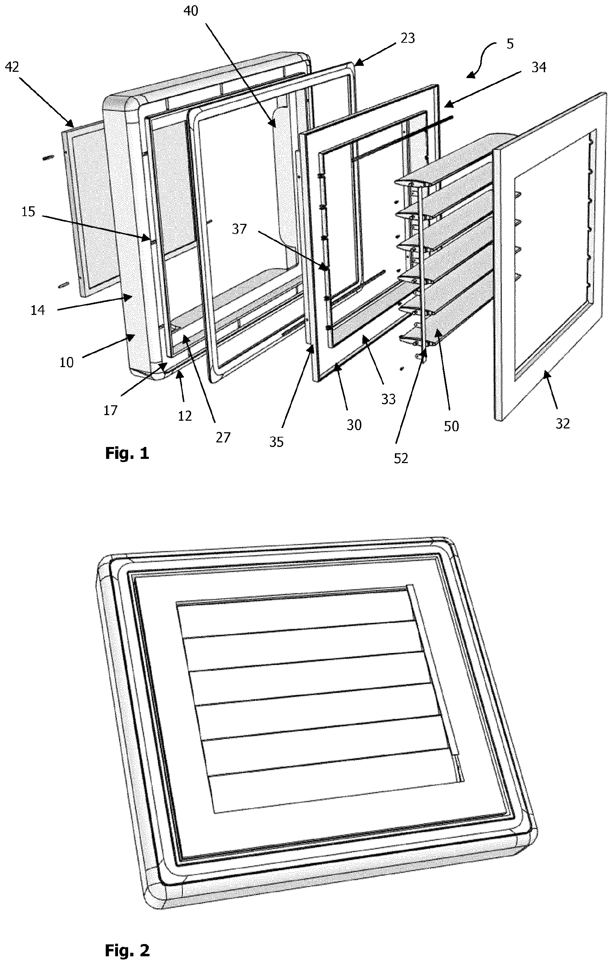

In a preferred installation, holes 15 (see Fig. 1) are drilled or otherwise preformed in a rebate or channel 17 that extends around the perimeter of the front face 12. The holes 15 enable the outer frame to be attached to or near the existing window of the caravan, motor home or other vehicle. This is advantageous as the existing window frame provides suitable attachment points and structural rigidity. The installation technician can make additional holes 15 at suitable locations within the channel 17. The holes can be placed to align with existing fastener holes in the window frame, or at locations on or near the window frame that are suitable for additional fastener placement, for example, in alignment with structural joists or beams.

Once the outer frame 10 is secured to the wall 20, a rectangular cover plate 23 is fitted to the channel 17. As depicted in Fig. 2, the cover plate 23 is sized to fill the channel 17, so that the external surface of the cover plate 23 remains generally flush with the front face 12 of the outer frame 10. This provides a neat and visually uninterrupted finish, in which the fasteners are concealed. The cover plate 23 may be attached with adhesive, or pressure fit.

The cover plate 23 may be in the form of a rigid plastic member. Alternatively, the cover plate 23 could be provided in the form of a flexible elastic material, which is fitted like a gasket or seal.

In an alternative mounting arrangement shown in Fig. 3, holes 16 may be formed on the front face 12 of the outer frame 10. The holes 16 act as mounting points when securing the outer frame 10 to the wall 20 of the vehicle. A screw or other suitable fastener can be inserted through the holes 16 and into the wall 20. The fastener head may be visible in this embodiment. In this arrangement, the holes tend to be preformed, and located to correspond with an existing and predefined mounting region around a given window type.

In the embodiment of Fig. 3, the fastener heads are visible on the front of the outer frame 10 when installed.

Referring to the outer frame 10 of Fig. 1, the body portion 12 of the outer frame 10 includes a rebate 27 for seating an internal frame 30 which holds the louver blades 50. The rebate 27 is generally rectangular and may optionally include a channel 19 for attaching a mohair seal (or another suitable seal).

The window covering device 5 includes an internal frame 30 corresponding in size and configured to fit snugly within the outer frame 10, within the rebate 27. The internal frame 30 is generally square or rectangular and is seated within the outer frame 10 with hinges 35, and free to pivot about a vertical axis. However, it will be appreciated that the opening could occur about a horizontal axis. The hinges 35 may be mounted along the vertical side or top and bottom edges of the internal frame 30. In the preferred embedment the hinge arrangement may be a Herline type surface mounted hinge. However, other hinges may alternatively be deployed.

In the arrangement where the internal frame 10 pivots about a horizontal axis, the internal frame 30 is held with at least one and preferably two pneumatic struts. This enables the frame 30 to be held open, and the pneumatic struts counter the gravitational forces that would otherwise urge the internal frame 30 to return to a closed position.

The internal frame 30 includes a front face 32, and a rear body 33. The louver blades 50 are sandwiched between the front face 32 and rear body 33, and each mounted to apertures which are formed in the vertical stiles 37 of the rear body 33. When the front face 32, and a rear body 33 are secured, the mounting portion located at the end of each louver blade 50 is concealed within the internal frame 30.

In one embodiment, a fly screen mounting structure 40 extends away from the rear surface of the internal frame 30. The fly screen mounting unit 40 is provided in the form of a protrusion that extends adjacent to the perimeter of the internal frame 30, as seen in Fig. 4. The flyscreen mounting structure 40 is sufficiently deep to enable the louver blades 50 to pivot between the closed and partially open positions, without being inhibited by the flyscreen 42.

In practice the fly screen mounting unit 40 is the same shape as the internal frame 30, but slightly smaller in outer dimensions, so that it does not contact with the outer frame 10 when the internal frame 30 is transitioning between opened and closed positions.

A flyscreen 42 is secured to the fly screen mounting unit 40. The flyscreen 42 is mounted to the rear surface of the internal frame 30. As shown in Fig. 4, the flyscreen has a perimeter frame 43, and four fasteners 45 secure the flyscreen to the internal frame 30. It will be appreciated that more or less than four fasteners may be deployed.

Alternatively (or additionally) to the above described use of fasteners, the flyscreen 42 may be attached to the internal frame 30 with a double sided adhesive, magnetic strips, or alternatively it may be fitted in a rebated channel or otherwise attached. The flyscreen 42 may be replaced if it becomes damaged.

The fly screen 42 is most commonly secured to the internal frame 30, and acts to distance the flyscreen 42 from the louver blades 50. The separation between the flyscreen 42 and the internal frame 30 enables the louvers 50 to be pivoted between open and closed positions without contacting with the flyscreen. As such, flyscreen protection is available in both closed and partially open louver configurations. However, it is possible that the flyscreen 42 may alternatively be secured to the outer frame 10.

The louver blades 50 are each connected to each other blade with a tie bar 52. This enables the blades 50 to be moved simultaneously. By moving the tie bar, or a single blade 50 in the group, all of the blades 50 move in unison.

Advantageously the assembly of the outer frame 10 and the internal frame 30 can be provided as a complete unit that can be retrofitted over existing windows regardless of the size of the window. As long as the window of the vehicle or boat fits within the outer frame 10 then the device 5 can be installed. In practice this allows the device 5 to be retrofitted without requiring customisation to precise site-specific dimensions. This enables the device 5 to be provided in a number of predefined sizes that can enable window covering to be achieved in the majority of possible applications.

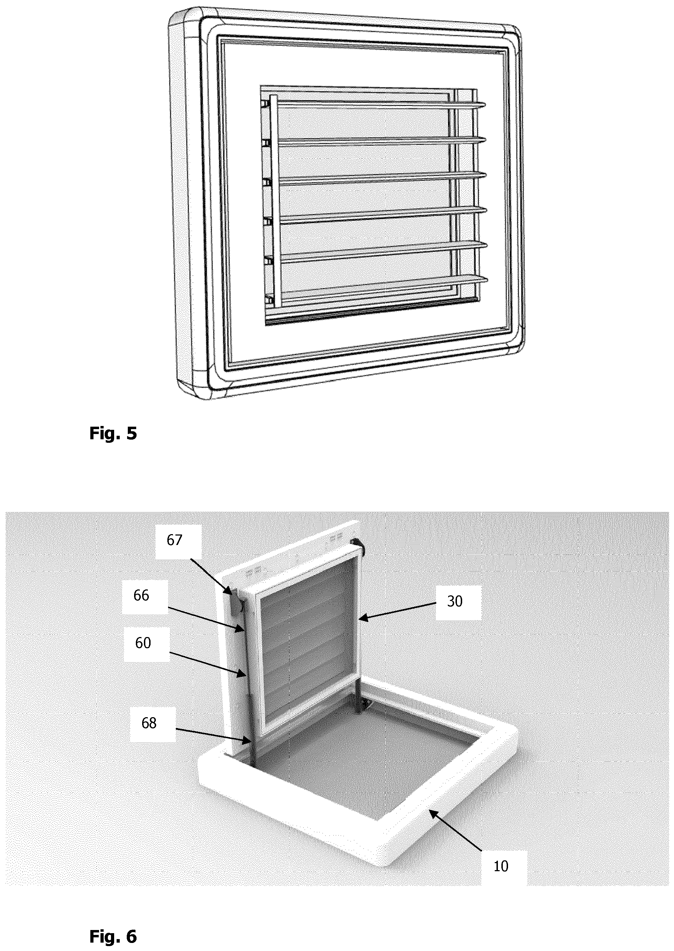

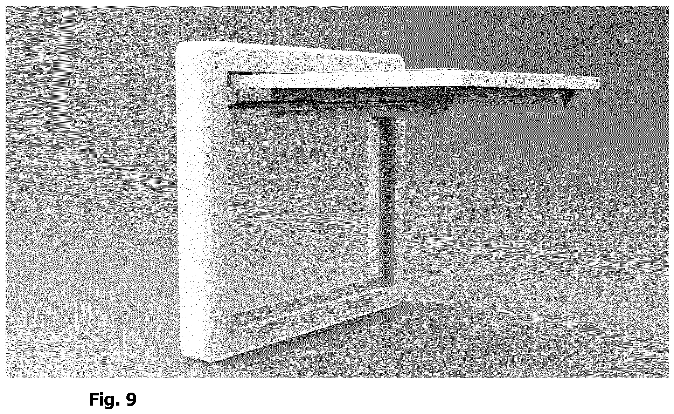

Figs. 6 to 9 show an alternative embodiment of the vehicle window covering device 5, in which the outer frame 10 and the internal frame 30 are coupled with hinges, and also with pneumatic struts 60. The pneumatic struts 60 enable the internal frame 30 to be held at a desired open position, ranging from partially to fully open. This provides additional possibilities for the user to customise airflow, privacy and light. In addition, the inclusion of pneumatic struts 60 enables the device 5 to be installed with the hinge on the top, bottom, or either the right or left side, as the pneumatic struts are able to counter gravitational forces that may otherwise unintentionally cause the internal frame 30 to open or close. This is particularly relevant noting that the device 5 is used on vehicles such as caravans, where there may be significant forces acting on the internal frame 30 during movement of the caravan, which could cause the frames 10, 30 to unintentionally move relative to each other.

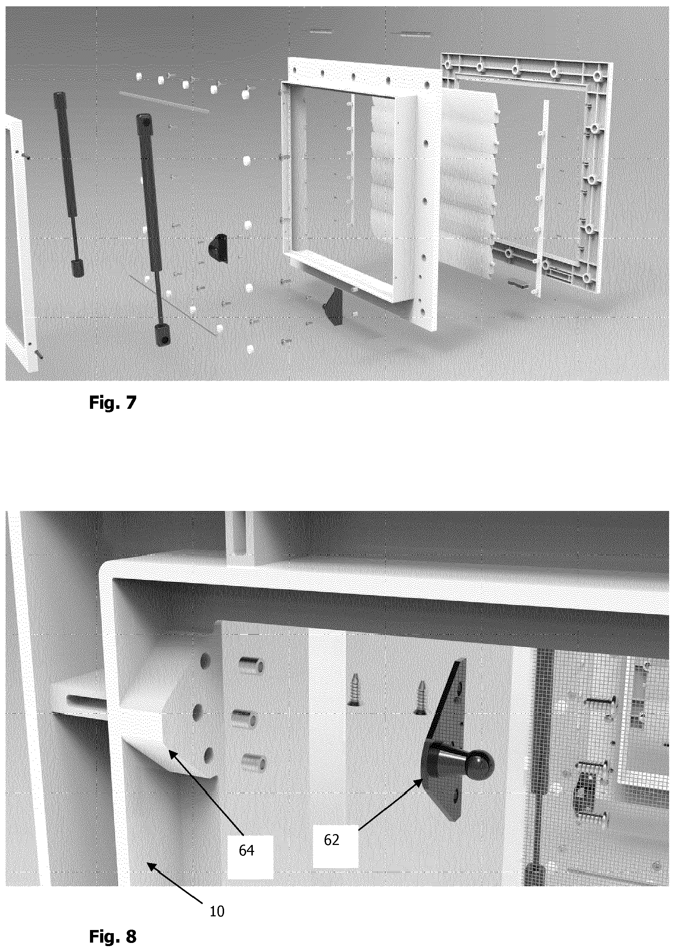

Referring to Fig. 8, a first strut mounting bracket 62 is shown. The first bracket 62 is secured with fasteners, such as screws, to a mounting block 64 formed on the outer frame 10. Referring to Fig. 6, a second strut mounting bracket 67 is attached to a rear face of the internal frame 30. The pneumatic strut 60 has a first end 66 configured to attach to the first strut mounting bracket, and a second end 68 configured to attach to the second strut mounting block 64. The attachment is typically by way of a ball and socket connection.

The strut 60 is telescopically extensible, and the body of the strut passes through the opening of the outer frame 10, as shown in Fig. 6.

Whilst the embodiment of Figs. 6 to 9 is depicted with two pneumatic struts, it will be appreciated that a single strut 60 could alternatively be used.

Advantageously in the embodiment of Figs. 1 and 2, the outer frame 10 frame has fastener receiving holes located in the rebated channel 17. However, the installer can create new holes within the rebated channel 17, and this facilitates the install to be customised based on site specific factors. Once the cover plate 23 is fitted, the fasteners are no longer visible.

Advantageously, the outer frame 10 rebate 27 for seating the internal frame 30 improves thermal and light blocking properties.

Although the invention has been described with reference to specific examples, it will be appreciated by those skilled in the art that the invention may be embodied in many other forms.

## Claims

1. A vehicle window covering device (5) comprising:
an outer frame (10) configured to be installed against an internal wall (20) of a vehicle at a location surrounding a window, the outer frame including a front face (12); and
a generally perpendicular outer return (14), the outer return being configured to be seated against the internal wall or window frame of the vehicle,
an internal frame (30) hingedly secured to the outer frame, the internal frame being selectively pivotal between an open position and a closed position in which the internal frame is at least partially located within the outer frame.

2. The vehicle window covering device of claim 1, wherein the outer frame front face (12) includes a generally rectangular channel having one or more fastener receiving holes (16) or slots, further wherein the device includes a cover plate (23) configured to at least partially fill the rectangular channel to conceal fasteners.

3. The vehicle window covering device of claim 1 or 2, wherein the outer frame front face (12) further includes an inner return (14), wherein the outer and inner returns extend away from opposing edges of the outer frame front face, wherein the inner return is configured to seat the internal frame (30).

4. The vehicle window covering device of claim 3, wherein the outer frame inner return (14) defines a rebate (27) configured to receive at least a portion of the internal frame (30).

5. The vehicle window covering device of claim 4, wherein a wall of the outer frame inner return (14) defining the rebate includes a channel (19) configured to receive a seal.

6. The vehicle window covering device of any one of the preceding claims, wherein the internal frame (30) includes a front face (32) and a rear body (33), and a plurality of louver blades (50) have mounting portions which are sandwiched between the front face and rear body.

7. The vehicle window covering device of claim 6, wherein the internal frame rear body (33) includes a fly screen mounting unit (40).

8. The vehicle window covering device of claim 7, wherein the internal frame rear body (33) is fabricated in a rectangular shape from a generally "L" shaped profile, having a first arm secured to the front face, and a second arm extending away from the rear side of the internal frame (30), the second arm providing the fly screen mounting unit (40).

9. The vehicle window covering device of any of claims 1 to 8, wherein the outer frame front face (12) includes a plurality of predefined holes located on a generally rectangular path, wherein the holes are configured to receive fasteners.

10. The vehicle window covering device of any one of the preceding claims, further comprising a pneumatic strut (60) extending between the internal frame and the outer frame.

11. The vehicle window covering device of claim 10, wherein two pneumatic struts (60) are included, and positioned one on either side of the internal frame (30).
